# EUROPÄISCHE PATENTANMELDUNG

(11) **EP 2 439 109 A1**
(43) Veröffentlichungstag der Anmeldung: **11.04.2012**
(21) Anmeldenummer: 11005391.5
(22) Anmeldetag: 01.07.2011
(51) Int. Cl.: B60R 16/02, H02G 3/08, F02M 25/07, G01D 5/14

(54) **Befestigung von montierbaren Elementen auf Kabelmantel**

(30) Priorität: 02.07.2010 DE 102010025945
(71) Anmelder: Hirschmann Automotive GmbH, 6830 Rankweil (AT)
(72) Erfinder: Janc, Thomas, 6845 Hohenems (AT); Kopf, Hubert, 2832 Röthis (AT)
(74) Vertreter: Greif, Thomas

(57) **Zusammenfassung**

Die Erfindung betrifft ein Verfahren zur Festlegung zumindest eines Elementes auf einem aus einem Kunststoffmaterial bestehenden Außenmantel eines Kabels, wobei innerhalb des Außenmantels ein oder mehrere elektrische Leiter angeordnet ist/sind, wobei erfindungsgemäß vorgesehen ist, dass das zumindest eine Element in einem ersten Schritt in seiner Sollposition auf dem Außenmantel festgelegt wird, wobei mit dem Verfahren zur Festlegung eine Verschiebekraft des zumindest einen Elementes auf dem Kabelmantel von mindestens 100 N erzielt wird.

## Beschreibung

Die Erfindung betrifft ein Verfahren zur Festlegung eines Elementes auf einem aus einem Kunststoffmaterial bestehenden Außenmantel eines Kabels, wobei innerhalb des Außenmantels ein oder mehrere elektrische Leiter angeordnet ist/sind, gemäß den Merkmalen des Oberbegriffes des Patentanspruches 1.

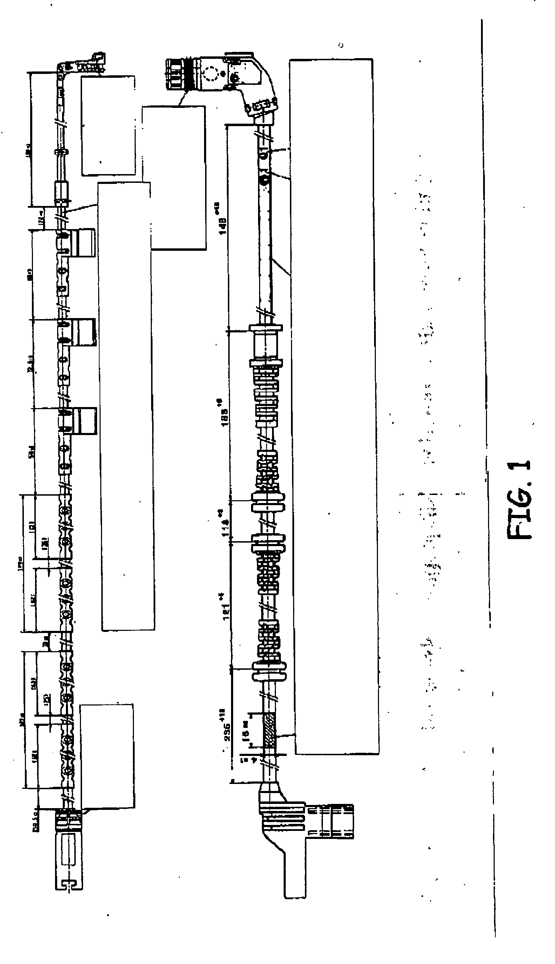

In der Figur 1 ist der Ausgangspunkt der vorliegenden Erfindung dargestellt. Die Erfindung betrifft ein eln- oder mehradriges Kabel mit elektrischen Leitern, die innerhalb einer Schutzhülle (Kabelmantel) angeordnet sind. An zumindest einem Ende des Kabels, im Regelfall an beiden Ende des Kabels, ist ein oder sind mehrere Steckverbinder angeordnet.

Solche Kabel (auch Kabelsätze genannt) finden oftmals in der Automobilindustrie Verwendung. Sie werden zwischen Verbrauchern, Steuereinheiten, Sensoren, Aktoren (Aktuatoren) und dergleichen verlegt und verbinden diese miteinander. Zur Verlegung des Kabels Innerhalb eines Kraftfahrzeuges ist es erforderlich, dass das Kabel einen definierten Verlauf nimmt, so dass z. B. Clips oder dergleichen auf dem Kabelmantel anzubringen sind, mit denen das Kabel in seinem Verlauf an Fahrzeugbestandteilen befestigt werden kann. Zwischen zwei Stellen, an denen das Kabel über Clips, Klammern oder dergleichen befestigt ist, können auch Elemente zwecks Scheuerschutzes auf dem Kabelmantel angeordnet werden. Darüber hinaus gibt es Einbausituationen, bei denen das Kabel von einem Nassraum (z. B. Motorraum oder Fahrwerksbereich) In einen Trockenraum (Innenraum des Fahrzeuges) durchgeführt werden muss. Hier ist es üblich, dass an der Durchführungsstelle durch ein Fahrzeugblech Tüllen oder ähnlich wirkende Dichtelemente auf dem Kabelmantel angeordnet werden.

Zur Realisierung solcher vorstehend beschriebener Elemente ist es schon bekannt, dass solche Elemente aus einem entsprechend geeigneten Kunststoffmaterial auf den Kabelmantel aufgespritzt werden. Dieser Aufspritzvorgang hat zwar den Vorteil, dass diese Elemente nur mit sehr hohen Verschiebekräften (Zug- oder Druckkräfte) axial relativ zu dem Kabelmantel verschoben werden können, da im normalen Betrieb eine solche Verschiebung nicht gewünscht ist. Diese nicht verschiebbar und aufgespritzten Elemente haben jedoch den Nachteil, dass sie nicht montierbar sind, so dass keine Flexibilität gegeben ist, falls das Element nicht genau an der Stelle aufgespritzt worden ist, an der es später im Fahrzeug eingesetzt werden soll. Um diesen Nachteil zu beheben, ist es schon bekannt geworden, diese Elemente nicht aufzuspritzen, sondern als vom Kabel separat ausgebildete Elemente auf dem Kabelmantel zu montieren. Damit wird zwar die erforderliche Flexibilität erzielt, jedoch welsen diese montierten Elemente nicht die nötigen Haltekräfte/Verschiebekräfte auf.

Bei dem erstgenannten Verfahren, bei dem die Elemente in einem definierten Abstand zueinander auf dem Kabelmantel aufgespritzt werden, ist es erforderlich, dass ein einziges spezielles Werkzeug, dessen Herstellung mit hohen Kosten verbunden ist, hergestellt wird, durch welches die Position oder die Positionen des zumindest einen Elementes oder der mehreren Elemente auf dem Kabel festgelegt ist. Das bedeutet, dass für jeden Kabelsatz, bei dem die Position oder die Positionen des zumindest einen Elementes auf dem Kabel festgelegt ist, ein eigenständiges Werkzeug hergestellt werden muss. In dieses Werkzeug wird das Kabel eingelegt und dann der Umspritzvorgang durchgeführt, so dass danach das zumindest eine Element in seiner gewünschten Position auf dem Kabelmantel mit den erforderlichen Verschiebekräften festgelegt ist, wobei jedoch reproduzierbar nur gleiche Kabelsätze mit solchen festgelegten Positionen der Elemente hergestellt werden können. Dabei Ist keinerlei Flexibilität gegeben. Diese Flexibilität ist jedoch erforderlich, wenn aufgrund eines Faceliftes einer Baureihe eines Fahrzeuges oder auch bei einer neuen Baureihe andere Positionen der Elemente auf dem Kabel gewünscht werden. Sollen also Elemente auf Kabeln festgelegt werden, die für andere Baureihen von Fahrzeugen oder im Falle eines Faceliftes benötigt werden, gehen damit sehr hohe Herstellungskosten und Amortisierungskosten für immer wieder neu zu erstellende Werkzeuge einher. Außerdem bedeutet dies bei der Serienfertigung solcher Kabelsätze einen hohen Umrüstaufwand in der Produktion. Mit dem Umspritzen zur Festlegung der Elemente auf dem Kabel werden zwar die erforderlichen Verschiebekräfte realisiert (insbesondere dann, wenn das Material des Elementes, zum Beispiel der Tülle, gleich ist dem Material des Kabelmantels), jedoch ist hierfür das spezielle aufwendiges Kunststoffspritzguss-Werkzeug erforderlich, das auf die jeweilige vorgegebene Geometrie des Kabelsatzes, zum Beispiel mit einem Stecker an einem Ende, einem Stecker oder einem freien Ende am anderen Ende und dazwischen angeordnet die jeweiligen Elemente, abgestimmt ist. Soll die nötige Flexibilität erzielt werden, ist es erforderlich, dass die Elemente nicht aufgespritzt (umspritzt) werden, sondern wie vorstehend schon erläutert als vom Kabel separat ausgebildete Elemente auf dem Kabelmantel angeordnet werden. Hierdurch werden mit den im Stand der Technik bekannten Verfahren jedoch nicht die erforderlichen Haltekräfte/Verschiebekräfte realisiert.

Der Erfindung liegt die Aufgabe zugrunde, ein Verfahren zur Festlegung eines Elementes auf einem aus einem Kunststoffmaterial bestehenden Außenmantel eines Kabels bereitzustellen, mit dem bei der Montage gegenüber den aus dem Stand der Technik bekannten Montageverfahren eine hohe Flexibilität und gleichzeitig eine dauerhafte Lagefixierung des Elementes in seiner Sollposition auf dem Außenmantel des Kabels realisiert werden kann.

Diese Aufgabe ist durch die Merkmale des Patentanspruches 1 gelöst.

Erfindungsgemäß ist vorgesehen, dass das zumindest eine Element in einem ersten Schritt in seiner Sollposition auf dem Außenmantel festgelegt wird, wobei mit dem Verfahren zur Festlegung eine Verschiebekraft des zumindest einen Elementes auf dem Kabelmantel von mindestens 100 N (Newton) erzielt wird. Diese Verschiebekraft von mindestens 100 Newton, vorzugsweise mehr als 200 Newton oder ggf. auch mehr als 250 Newton, hat den Vorteil, dass einerseits die gewünschte Flexibilität bei der und zur Festlegung des zumindest einen Elementes an der gewünschten Sollposition auf dem Kabel realisiert werden kann und zum anderen während des Einsatzes des Kabels an seinem Einbauort, Insbesondere im Fahrzeug, die notwendigen Haltekräfte/Verschiebekräfte realisiert sind. Diese durch das Verfahren zur Festlegung aufgebrachten Kräfte bewirken, dass das Element so lange axial unverschiebbar an seiner gewünschten Sollposition auf dem Kabelmantel verbleibt, bis im unwahrscheinlichen Fall eine Kraft auf den Kabelsatz, insbesondere auf das zumindest eine Element, wirkt, die zu einer axialen Verschiebung führen würde. Dabei sind jedoch die genannten Kräfte so gewählt, dass diese selbst unter ungünstigen Betriebsbedingungen eines Fahrzeuges nicht auftreten. Damit wird in vorteilhafter Weise ein Kabelsatz mit den gewünschten Elementen an ihren Sollpositionen bereitgestellt, der den Anforderungen im Betrieb eines Fahrzeuges genügt.

Bei dem ersten Schritt (es kann allgemein ein weiterer Schritt folgen, muss aber nicht, wie auch bei den folgenden ergänzenden oder alternativen Schritten zur Festlegung des Elementes, so dass auch nur ein einziger Schritt erfolgen kann) des Festlegens des Elementes in seiner Sollposition auf dem Außenmantel wird das Element auf dem oder mit dem Außenmantel verklebt, verschweißt oder verklemmt. Kommt ein Klemmprozess in Betracht, wird in vorteilhafter Weise ein Metallring verwendet, der die notwendigen Kräfte aufbringt, um das auf dem Außenmantel angeordnete Element, dessen Innenkontur der Außenkontur des Außenmantels entspricht, durch Aufbringung einer entsprechenden Druckkraft auf dem Außenmantel in seiner Sollposition festzulegen.

Eine besonders vorteilhafte Anwendung des erfindungsgemäßen Verfahrens zur Festlegung eines Elementes auf einem Außenmantel eines Kabels ist in der Anwendung In der Automobiltechnik zu sehen. Mit dem erfindungsgemäßen Verfahren können in Abhängigkeit der gewünschten Einbauräume bzw. Einbausituationen die jeweils erforderlichen Elemente (oder auch nur ein Element) auf dem Außenmantel des Kabels nicht nur an der gewünschten Position, sondern auch mit der erforderlichen Flexibilität und gleichzeitig der in der Automobilindustrie erforderlichen Dauerhaltbarkeit festgelegt werden. Die Flexibilität wird dadurch erreicht, dass das Element In dem ersten Schritt in der Sollposition auf dem Außenmantel des Kabels festgelegt wird, wobei wie schon vorstehend erläutert dieser erste Schritt manuell oder automatisiert ausgeführt werden kann. Gerade bei den Festlegeprozessen durch Verkleben oder Verklemmen ist der Vorteil gegeben, dass noch manuelle oder auch automatisierte axiale Verschiebungen des auf dem Außenmantels schon vorfestgelegten Elementes möglich sind, bevor dieses in dem weiteren Schritt dauerhaft und unverschiebbar auf dem Außenmantel festgelegt wird.

Die Erfindung stellt mit anderen Worten einerseits ein Verfahren bereit, mit dem die vorstehend beschriebenen Elemente wie z. B, Tüllen, Clips, Scheuerschutzelemente, Klammern oder dergleichen manuell oder automatisiert auf dem Kabelmantel montiert werden können. Bei diesem Befestigungsprozess der Elemente am Kabel handelt es sich um Klebeprozesse, ultraschallschweißen, laserschweißen oder Klemmen mit einem Metallring. Diese Verfahren haben den Vorteil, dass die jeweiligen Elemente genau an der Stelle als separate Bauteile zunächst auf dem Kabel montiert und vorrübergehend an der montierten Stelle in ihrer Lage fixiert werden. Dies kann beispielsweise in einem Montageautomaten erfolgen. Erst danach, nachdem die gewünschte Lage eingenommen worden ist, werden über den geschilderten Befestigungsprozess die Elemente auf dem Kabelmantel dauerhaft und damit mit den gewünschten hohen Verschiebekräften auf dem Kabelmantel festgesetzt. Durch diesen neuen Prozess und das daraus entstehende konfektionierte Kabel werden einerseits die gewünschte Montierbarkeit und damit Lagepositionierung und andererseits die gewünschten Haltekräfte (hohe Verschiebekräfte von mindestens 100 Newton), aus denen eine nahezu hundertprozentige Unverschiebbarkeit resultiert, realisiert. Mit den geschilderten Befestigungsprozessen ist darüber hinaus die Verschlebekraft der einzelnen montierten Elemente deutlich höher als bei Elementen, die Im Spritzvorgang auf dem Kabelmantel angeordnet werden. So hat z. B. ein Klebeprozess den Vorteil, dass der Klebewerkstoff auf die Materialen von Kabelmantel und Element, die gleich oder unterschiedlich voneinander sein können, abgestimmt werden kann. Beim Ultraschallschweißen oder auch beim Laserschweißen ist eine besonders innige Verbindung des Materials des Kabelmantels und des Elementes dann gegeben, wenn beide aus dem gleichen Material bestehen. Dies erhöht in besonders vorteilhafter Weise auch die Dichtwirkung, da beim Verschweißen von einer Tülle mit dem Kabelmantel hundertprozentige Längswasserdichtheit realisiert wird. Ein weiterer Vorteil ist darin zu sehen, dass bei dem vorgeschlagenen Befestigungsprozess die Außenkontur, die Anzahl, die Funktion und die Reihenfolge der Elemente beliebig gewählt werden kann. Außerdem ist von Vorteil, dass durch die vom Kabel separat hergestellten Elemente deren Innengeometrie auf den Befestigungsprozess abgestimmt und optimiert werden kann.

Das Material des Elementes und das Material des Aussenmantels können gleich sein, wobei das erfindungsgemäße Verfahren aber bevorzugt bei voneinander unterschledlichen Materialien angewandt wird.

## Patentansprüche

1. Verfahren zur Festlegung zumindest eines Elementes auf einem aus einem Kunststoffmaterial bestehenden Außenmantel eines Kabels, wobei innerhalb des Außenmantels ein oder mehrere elektrische Leiter angeordnet ist/sind, **dadurch gekennzeichnet, dass** das zumindest eine Element in einem ersten Schritt In seiner Sollposition auf dem Außenmantel festgelegt wird, wobei mit dem Verfahren zur Festlegung eine Verschiebekraft des zumindest einen Elementes auf dem Kabelmantel von mindestens 100 N erzielt wird.

2. Verfahren nach Anspruch 1, **dadurch gekennzeichnet, dass** bei dem ersten Schritt das Element auf dem Außenmantel angeordnet und mit dem Außenmantel verklebt wird.

3. Verfahren nach Anspruch 1, **dadurch gekennzeichnet, dass** bei dem ersten Schritt das Element auf dem Außenmantel angeordnet und mit dem Außenmantel verschweißt, Insbesondere mittels Laser oder Ultraschall, wird.

4. Verfahren nach Anspruch 1, **dadurch gekennzeichnet dass** bei dem ersten Schritt das Element auf dem Außenmantel angeordnet und mit dem Außenmantel verklemmt wird.

5. Verfahren nach Anspruch 4, **dadurch gekennzeichnet, dass** das Element mit einem Metallring auf dem Außenmantel verklemmt wird.

6. Verfahren nach einem der vorhergehenden Ansprüche, **dadurch gekennzeichnet, dass** die Innenkontur des Elementes, mit dem das Element auf dem Außenmantel festgelegt wird, der Außenkontur des Außenmantels an der Position, an der das Element dort festgelegt werden soll, angepasst ist.

7. Verfahren nach einem der vorhergehenden Ansprüche, **dadurch gekennzeichnet, dass** das zumindest eine Element nach dem ersten Schritt in einem weiteren Schritt zumindest teilweise zusammen mit einem Teilbereich des Außenmantels des Kabels mit Kunststoff umspritzt wird.

8. Verfahren nach einem der vorhergehenden Ansprüche, **dadurch gekennzeichnet, dass** als Element eine Tülle, ein Clip, ein Scheuerschutzelement, eine Klammer oder dergleichen dauerhaft und unverschiebbar auf dem Außenmantel des Kabels festgelegt wird.
